# EUROPÄISCHE PATENTANMELDUNG

(11) **EP 3 493 107 A1**
(43) Veröffentlichungstag der Anmeldung: **05.06.2019**
(21) Anmeldenummer: 18191384.9
(22) Anmeldetag: 29.08.2018
(51) Int. Cl.: G06K 9/00, F41H 11/02, G06K 9/46, G06K 9/62, G06K 9/20, F41G 5/08

(54) **MOBILES OPTISCHES WEITBEREICHSAUFKLÄRUNGS- UND BEOBACHTUNGSSYSTEM MIT AUTOMATISCHER OBJEKTERKENNUNG UND VERFAHREN ZUR MOBILEN OPTISCHEN WEITBEREICHSAUFKLÄRUNG UND BEOBACHTUNG MIT AUTOMATISCHER OBJEKTERKENNUNG**

(30) Priorität: 30.11.2017 DE 102017011108
(71) Anmelder: MBDA Deutschland GmbH, 86529 Schrobenhausen (DE)
(72) Erfinder: GRABMEIER, Michael, 83022 Rosenheim (DE); LIEBACK, Rico, 86643 Rennertshofen (DE); STUCKY, Volker, 86554 Pöttmes (DE)
(74) Vertreter: Isarpatent

(57) **Zusammenfassung**

Ein mobiles optisches Weitbereichsaufklärungs- und -beobachtungssystem (MOWABS) umfasst ein Kommunikationssubsystem (50), eine Schnittstellenvorrichtung (70), welche mit dem Kommunikationssubsystem (50) über eine kabelgebundene Datennetzverbindung (E) in kommunikativer Verbindung steht, ein Sensorsystem (60) mit einer Sensoreinrichtung (63), welche mit der Schnittstellenvorrichtung (70) über eine kabelgebundene Datennetzverbindung (E) in kommunikativer Verbindung steht sowie mindestens einen Infrarotsensor, einen VIS-Sensor und einen Laserentfernungsmesser aufweist, und mit einem Sensorsteuergerät (62), welches dazu ausgelegt ist, Bilddaten des Infrarotsensors und des VIS-Sensors zu empfangen, mit Hilfe mindestens eines neuronalen Faltungsnetzwerkes in den empfangenen Bilddaten eine automatische Objekterkennung durchzuführen und Informationen über automatisch erkannte Objekte an das Kommunikationssubsystem (50) zu übermitteln, eine Antenneneinrichtung (40), welche mit dem Kommunikationssubsystem (50) über eine Funkverbindung (RF) in kommunikativer Verbindung steht und dazu ausgelegt ist, die Informationen über automatisch erkannte Objekte per Funkverbindung (RF) an einen Gefechtsstand (1) zu übermitteln, und eine Energieversorgungseinrichtung (20), welche eine Energiequelle (23) aufweist und welche dazu ausgelegt ist, das Sensorsystem (60), das Kommunikationssubsystem (50) und die Antenneneinrichtung (40) mit elektrischer Energie zu versorgen.

## Beschreibung

### TECHNISCHES GEBIET DER ERFINDUNG

Die Erfindung betrifft mobile optische Weitbereichsaufklärungs- und - beobachtungssysteme (MOWABS; englisch auch "long-range reconnaissance and observation systerms", LORROS), insbesondere für den Einsatz in taktischen Luftverteidigungssystemen, sowie Verfahren zur mobilen optischen Weitbereichsaufklärung- und -beobachtung, welche eine automatische bzw. maschinelle Objekterkennung implementieren.

### TECHNISCHER HINTERGRUND

Luftverteidigungssysteme, LVS, bieten einen Nah- und Nächstbereichsschutz gegen Bedrohungen aus der Luft. LVS gewährleisten sowohl stationären Schutz als auch hochmobilen Begleitschutz sowie unmittelbare Feuerbereitschaft als eines von mehreren Elementen der integrierten Luftverteidigung. LVS verwenden häufig eine einheitliche Systemarchitektur zur Anbindung von Sensoren und Effektoren, die auch eine sichere Aufklärung und Bekämpfung aktueller Bedrohungen durch taktische ballistische Flugkörper (TBM) und luftatmende Ziele (ABT) sowie durch Klein- und Kleinstziele gewährleistet.

Ein Baustein einer leistungsfähigen Systemarchitektur eines LVS sind optische Weitbereichsaufklärungs- und -beobachtungssysteme (MOWABS; englisch auch "long-range reconnaissance and observation systerms", LORROS), welche optische Sensoren wie etwa CCD-Bildsensoren als Tagsichtgeräte und vorwärts gerichtete multispektrale Infrarot- bzw. Wärmebildkameras ("Forward Looking Infrared", FLIR) als Nachtsichtgeräte einsetzen, um eine manuelle und/oder maschinelle Detektion, Klassifikation und Identifikation von potentiellen Zielobjekten des LVS zu ermöglichen.

Ein MOWABS wird durch den Gefechtsstand oder durch ein Radargerät auf ein dem System bekanntes Flugobjekt eingewiesen und liefert Online-Bild- und/oder Online-Videodaten des verfolgten Flugobjektes in Echtzeit oder echtzeitnah an den Gefechtsstand. Gemäß vorgegebenen Kriterien zur Zielerfassung, Zielklassifikation, Zielidentifikation, Risikobewertung und den Einsatzregeln (Rules of Engagement) kann auf der Basis der durch das MOWABS erfassten optischen Daten eine manuelle Freigabe einer Zielbekämpfung im halbautomatischen oder manuellen Gefechtsmodus bzw. eine manuelle Blockierung im vollautomatischen Gefechtsmodus erfolgen.

Es besteht ein Bedarf an Möglichkeiten zur maschinellen Unterstützung eines Operators eines LVS bei der Entscheidungsfindung, ob eine Bekämpfung eingeleitet werden soll oder nicht, so dass eine Klassifikation und Identifikation von durch das LVS mit Abfangflugkörpern abzuwehrenden Zielobjekten schneller und effizienter erfolgen kann.

Die Druckschrift US 6,529,614 B1 offenbart ein hybrides optoelektronisches Objekterkennungssystem mit einem Klassifikations- und Identifikationsprozessor auf Basis neuronaler Netzwerke. Die Druckschrift US 2009/0195401 A1 offenbart ein Überwachungssensorsystem mit einer automatischen Zielobjekterfassung und -identifikation. Die Druckschrift US 2012/0143808 A1 offenbart ein System zur Zielobjektidentifikation auf der Basis neuronaler Netzwerke. Die Druckschrift F/No-IV-21011/06/016-PROV-I, "QRs and Trial Directive of Long Range Reconnaissance and Observation Systerms (LORROS)", Bharat Sarkar, Government of India (http://mha1.nic.in/ORs/SurveillanceEquipment/ORsTriaI(LORROS) 20032017.PDF) offenbart qualitative Anforderungen an ein optisches Weitbereichsaufklärungs- und -beobachtungssystem.

### ZUSAMMENFASSUNG DER ERFINDUNG

Eine der Aufgaben der Erfindung besteht darin, die Geschwindigkeit und die Verlässlichkeit eines Zielklassifikation und -identifikation eines Luftverteidigungssystems im Rahmen einer integrierten Luftverteidigung zu verbessern, insbesondere den Abschuss eines eigenen Luftfahrzeuges oder die ausbleibende Bekämpfung eines feindlichen Luftfahrzeuges durch eine fehlerhafte optische Klassifikation bzw. Identifikation eines Luftfahrzeuges zu verhindern, und dadurch die Wirksamkeit von durch das Luftverteidigungssystem eingesetzten Abfangflugkörpern zu optimieren.

Diese und andere Aufgaben werden durch ein mobiles optisches Weitbereichsaufklärungs- und -beobachtungssystem (MOWABS) mit den Merkmalen des Anspruchs 1, ein Luftverteidigungssystem (LVS) mit den Merkmalen des Anspruchs 10, sowie ein Verfahren zur mobilen optischen Weitbereichsaufklärung- und -beobachtung mit den Merkmalen des Anspruchs 11 gelöst.

Gemäß einem ersten Aspekt der Erfindung umfasst ein MOWABS, insbesondere für den Einsatz in einer Systemarchitektur eines taktischen Luftverteidigungssystems als Element der integrierten Luftverteidigung, ein Kommunikationssubsystem, eine Schnittstellenvorrichtung, welche mit dem Kommunikationssubsystem über eine kabelgebundene Datennetzverbindung in kommunikativer Verbindung steht, ein Sensorsystem mit einer Sensoreinrichtung, welche mit der Schnittstellenvorrichtung über eine kabelgebundene Datennetzverbindung in kommunikativer Verbindung steht sowie einen oder mehrere Infrarotsensoren (beispielsweise Infrarotsensoren im nahen Infrarotbereich, im Kurzwellenlängeninfrarotbereich, im Mittelwellenlängeninfrarotbereich oder im Langwellenlängeninfrarotbereich), einen VIS-Sensor (englisch "visible", d.h. sichtbares Licht) und einen Laserentfernungsmesser aufweist, und mit einem Sensorsteuergerät, welches dazu ausgelegt ist, Bilddaten des Infrarotsensors und des VIS-Sensors zu empfangen, mit Hilfe eines neuronalen Faltungsnetzwerkes in den empfangenen Bilddaten eine automatische Objekterkennung, die die Diskrimination, die Klassifikation und die Identifikation eines Zieles umfasst, durchzuführen und Informationen über automatisch erkannte Objekte an das Kommunikationssubsystem zu übermitteln, eine Antenneneinrichtung, welche mit dem Kommunikationssubsystem über eine Funkverbindung in kommunikativer Verbindung steht und dazu ausgelegt ist, die Informationen über automatisch erkannte Objekte per Funkverbindung an einen Gefechtsstand zu übermitteln, und eine Energieversorgungseinrichtung, welche eine Energiequelle aufweist und welche dazu ausgelegt ist, das Sensorsystem, das Kommunikationssubsystem und die Antenneneinrichtung mit elektrischer Energie zu versorgen.

Gemäß einem zweiten Aspekt der Erfindung umfasst ein Luftverteidigungssystem einen Gefechtsstand, ein Radargerät, eine Flugabwehrkörperabschusseinrichtung, und ein MOWABS gemäß dem ersten Aspekt der Erfindung, welches mit dem Gefechtsstand in Kommunikationsverbindung steht.

Gemäß einem dritten Aspekt der Erfindung umfasst ein Verfahren zur mobilen optischen Weitbereichsaufklärung- und -beobachtung, insbesondere zur Unterstützung der Detektion, Klassifikation und Identifikation von Zielobjekten in einem Gefechtsstand eines taktischen Luftverteidigungssystems als Element der integrierten Luftverteidigung, die Schritte des Koppelns eines Kommunikationssubsystems mit einer Schnittstellenvorrichtung über eine kabelgebundene Datennetzverbindung, des Koppelns einer mindestens einen Infrarotsensor, einen VIS-Sensor und einen Laserentfernungsmesser aufweisenden Sensoreinrichtung mit der Schnittstellenvorrichtung über eine kabelgebundene Datennetzverbindung, des Durchführens einer automatischen Objekterkennung in Bilddaten des Infrarotsensors und des VIS-Sensors mit Hilfe eines neuronalen Faltungsnetzwerkes, des Übermittelns von Informationen über automatisch erkannte Objekte an das Kommunikationssubsystem, und des Versorgens der Sensoreinrichtung und des Kommunikationssubsystems mit elektrischer Energie aus einer Energiequelle einer Energieversorgungseinrichtung.

Eine wesentliche Idee der Erfindung besteht darin, eine leistungsfähige Sensorik eines mobilen optischen Weitbereichsaufklärungs- und -beobachtungssystems mit einem leistungsfähigen Funkkommunikationssubsystem zu kombinieren, um das mobile optische Weitbereichsaufklärungs- und -beobachtungssystem in ein taktisches Funkkommunikationsnetz eines Luftverteidigungssystem zu integrieren.

Ein besonderer Vorteil in den erfindungsgemäßen Lösungen besteht darin, dass durch die räumliche Trennung der Sensorik vom Gefechtsstand und der Flugkörperabschusseinrichtung des Luftverteidigungssystems ein stiller Gefechtsmodus ermöglicht wird, der durch die verschiedenen Konfigurationen des mobilen optischen Weitbereichsaufklärungs- und -beobachtungssystems flexibel einstellbar ist. Dies ermöglicht eine wirkungsvolle Zielverifikation und Zieleinweisung in einem Luftverteidigungssystem sowie eine Optimierung des Abwehrpotentials beispielsweise eines Laserwaffensystems zur Kleinstflugkörperabwehr (Drohnen).

Zudem kann eine leistungsstarke automatische Objekterkennung, die am Ort der Sensorik lokal durchgeführt wird, den Feuerleitenden im Gefechtsstand bei der Entscheidungsfindung zur Zielerfassung und -freigabe kognitiv, psychisch und stressmäßig entlasten. Der Einsatz echtzeitfähiger neuronaler Faltungsnetzwerke wie SqueezeNet, ZynqNet oder Faster R-CNN bietet hierbei eine sensorspezifische Echtzeitauswertung, die durch überwachtes Lernen ("embedded deep learning") eine intelligente maschinelle Vorverarbeitung von Bilddaten ermöglicht. Durch die lokale Objekterkennung (Bildsegmentierung, Merkmalsextraktion und Merkmalsklassifikation, Objektklassifikation und -identifikation) kann einer Datenlatenz sowie gegebenenfalls einer Kompromittierung der Datensicherheit effektiv vorgebeugt werden. Zwischen Bildgenerierung in der Sensorik und den Verarbeitungsmodulen (Inferenz-Engines), die die maschinelle Bildverarbeitung mittels Faltungsnetzwerken ausführen, muss keine Funkstrecke existieren, so dass ein Abfangen oder unbefugtes Manipulieren der Daten entscheidend erschwert wird.

Vorteilhafte Ausgestaltungen und Weiterbildungen ergeben sich aus den weiteren Unteransprüchen sowie aus der Beschreibung unter Bezugnahme auf die Figuren.

Gemäß einigen Ausführungsformen des erfindungsgemäßen MOWABS kann das MOWABS weiterhin einen Container aufweisen, in welchem das Kommunikationssubsystem und die Schnittstellenvorrichtung angeordnet sind. Dabei kann in einigen Ausführungsformen des erfindungsgemäßen MOWABS eine außen an dem Container angebaute Klimaanlage vorhanden sein, welche dazu ausgelegt ist, den Container zu klimatisieren.

Gemäß einigen weiteren Ausführungsformen des erfindungsgemäßen MOWABS kann das MOWABS weiterhin ein an der Sensoreinrichtung angebautes Navigationsgerät aufweisen, welches mit der Schnittstellenvorrichtung über eine kabelgebundene Datennetzverbindung mit der Schnittstelleneinrichtung in kommunikativer Verbindung steht.

Gemäß einigen weiteren Ausführungsformen des erfindungsgemäßen MOWABS kann das MOWABS weiterhin eine außen an dem Container angebaute Sensorhubvorrichtung aufweisen, welche die Sensoreinrichtung trägt und welche über eine kabelgebundene Datennetzverbindung in kommunikativer Verbindung steht.

Gemäß einigen weiteren Ausführungsformen des erfindungsgemäßen MOWABS und des erfindungsgemäßen Verfahrens kann das Kommunikationssubsystem einen Kommunikations- und Routingrechner, einen IT-Sicherheitscontroller mit einer Zeitsynchronisierungseinheit und eine Administratorkonsole aufweisen.

Gemäß einigen weiteren Ausführungsformen des erfindungsgemäßen MOWABS und des erfindungsgemäßen Verfahrens kann die Antenneneinrichtung ein Antennenfunkgerät, zumindest eine Funkantenne, die als Sektor- oder als Richtfunk- oder als Stabantenne ausgeprägt sein kann, und ein Antenneneinrichtungsbedienpanel aufweisen.

Gemäß einigen weiteren Ausführungsformen des erfindungsgemäßen MOWABS und des erfindungsgemäßen Verfahrens kann die Energieversorgungseinrichtung eine Energieversorgungsmanagementkomponente und ein Energieversorgungseinrichtungsbedienpanel aufweisen. Dabei kann die Energiequelle in einigen Ausführungsformen eine vorzugsweise vibrationsarme Brennstoffzelle mit einer daran angeschlossenen nicht-unterbrechbaren Batterie aufweisen.

Gemäß einigen weiteren Ausführungsformen des erfindungsgemäßen MOWABS kann das MOWABS weiterhin eine an der Unterseite des Containers montierte Adaptervorrichtung aufweisen, über welche der Container auf einem Kraftfahrzeug oder einem Kraftfahrzeuganhänger montierbar ist.

Gemäß einigen weiteren Ausführungsformen des erfindungsgemäßen MOWABS kann das Sensorsteuergerät dazu ausgelegt sein, die empfangenen Bilddaten des Infrarotsensors und des VIS-Sensors in separaten Verarbeitungsmodulen zu verarbeiten, mit Hilfe eines ersten neuronalen Faltungsnetzwerkes in den empfangenen Bilddaten des Infrarotsensors eine automatische Objekterkennung durchzuführen und mit Hilfe eines zweiten neuronalen Faltungsnetzwerkes in den empfangenen Bilddaten des VIS-Sensors eine automatische Objekterkennung durchzuführen.

Gemäß einigen weiteren Ausführungsformen des erfindungsgemäßen MOWABS kann das Sensorsteuergerät dazu ausgelegt ist, die empfangenen Bilddaten des Infrarotsensors und des VIS-Sensors in einem gemeinsamen Verarbeitungsmodul zu verarbeiten, mit Hilfe eines ersten neuronalen Faltungsnetzwerkes in den empfangenen Bilddaten des Infrarotsensors eine automatische Objekterkennung durchzuführen, mit Hilfe eines zweiten neuronalen Faltungsnetzwerkes in den empfangenen Bilddaten des VIS-Sensors eine automatische Objekterkennung durchzuführen und mit Hilfe eines dritten neuronalen Faltungsnetzwerkes die erkannten Merkmale der Objekte der Bilddaten des Infrarotsensors und des VIS-Sensors zu gemeinsamen Informationen über automatisch erkannte Objekte zu fusionieren.

Gemäß einigen Ausführungsformen des erfindungsgemäßen Verfahrens können Bilddaten des Infrarotsensors und des VIS-Sensors in separaten Verarbeitungsmodulen verarbeitet werden. Dabei kann mit Hilfe eines ersten neuronalen Faltungsnetzwerkes in den Bilddaten des Infrarotsensors eine automatische Objekterkennung durchgeführt werden und mit Hilfe eines zweiten neuronalen Faltungsnetzwerkes in den Bilddaten des VIS-Sensors eine automatische Objekterkennung durchgeführt werden.

Gemäß einigen alternativen Ausführungsformen des erfindungsgemäßen Verfahrens können Bilddaten des Infrarotsensors und des VIS-Sensors in einem gemeinsamen Verarbeitungsmodul verarbeitet werden. Dabei kann mit Hilfe eines ersten neuronalen Faltungsnetzwerkes in den Bilddaten des Infrarotsensors eine automatische Objekterkennung durchgeführt werden, mit Hilfe eines zweiten neuronalen Faltungsnetzwerkes in den Bilddaten des VIS-Sensors eine automatische Objekterkennung durchgeführt werden und mit Hilfe eines dritten neuronalen Faltungsnetzwerkes die erkannten Merkmale der Objekte der Bilddaten des Infrarotsensors und des VIS-Sensors zu gemeinsamen Informationen über automatisch erkannte Objekte fusioniert werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 ein schematisches Blockschaubild eines mobilen optischen Weitbereichsaufklärungs- und -beobachtungssystems gemäß einer Ausführungsform der Erfindung;
Fig. 2 ein schematisches Blockschaubild eines mobilen optischen Weitbereichsaufklärungs- und -beobachtungssystems gemäß einer weiteren Ausführungsform der Erfindung;
Fig. 3 eine beispielhafte Illustration eines Luftverteidigungssystems, in welchem ein mobiles optisches Weitbereichsaufklärungs- und -beobachtungssystem gemäß einer der Fig. 1 und 2 eingesetzt werden kann;
Fig. 4 ein Flussdiagramm eines Verfahrens zur Steuerung eines mobilen optischen Weitbereichsaufklärungs- und -beobachtungssystems gemäß einer weiteren Ausführungsform der Erfindung;
Fig. 5 ein schematisches Blockschaubild eines beispielhaften Sensorsteuergerätes, welches in einem mobilen optischen Weitbereichsaufklärungs- und - beobachtungssystem gemäß einer der Fig. 1 und 2 eingesetzt werden kann;
Fig. 6 ein schematisches Blockschaubild eines weiteren beispielhaften Sensorsteuergerätes, welches in einem mobilen optischen Weitbereichsaufklärungs- und -beobachtungssystem gemäß einer der Fig. 1 und 2 eingesetzt werden kann; und
Fig. 7 ein schematisches Blockschaubild einer Design- und Trainingseinheit als Teil der Einsatzplanung eines Luftverteidigungssystems.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

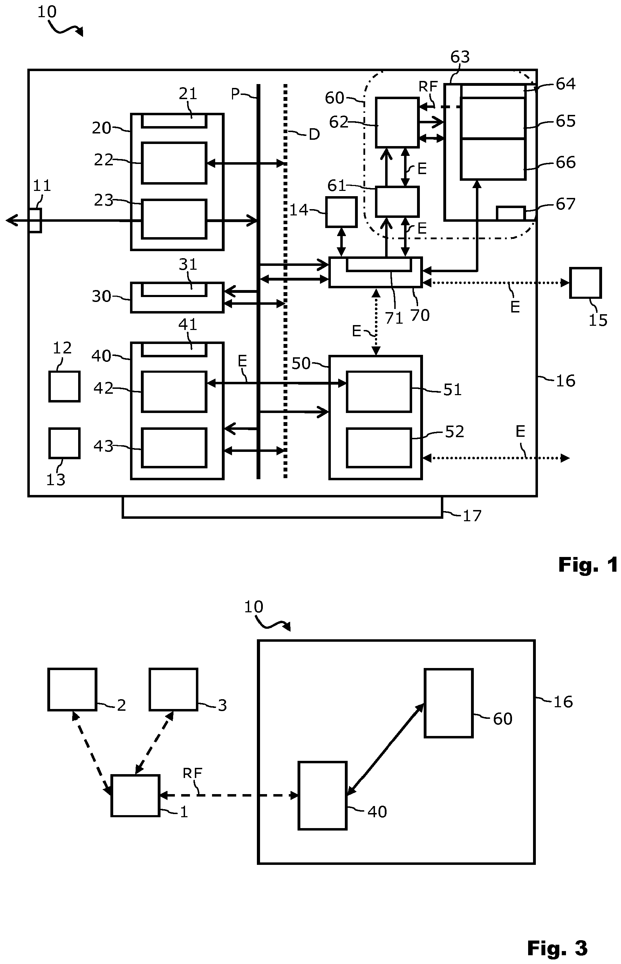

Fig. 1 zeigt ein schematisches Blockschaubild eines mobilen optischen Weitbereichsaufklärungs- und -beobachtungssystems 10. Das mobile optische Weitbereichsaufklärungs- und -beobachtungssystem (MOWABS) 10 weist zunächst einen Container 16 auf. Der Container 16 ermöglicht den Einbau bzw. Anbau von Komponenten des MOWABS 10 im Innenraum bzw. an den Außenseiten. Der Container 16 kann beispielsweise ein quaderförmiges Hohlkonstrukt aus Stahl oder einem anderen geeigneten Material sein. Im Innenraum des Containers 16 kann ausreichend Bauraum für die diversen Kommunikationskomponenten sowie einen Arbeitsplatz für das Management der Netzwerke und Domänen und einen Arbeitsplatz für die Bedienung der diversen Komponenten des MOWABS 10 aufweisen.

Der Container 16 kann geeignete Schließmechanismen aufweisen, beispielsweise solche, die der DIN-Norm 18251 für außen angebrachte Stauvorrichtungen genügen. Weiterhin kann der Container 16 in einer speziellen Stauvorrichtung eine Kabeltrommel 13 aufnehmen, auf der Ethernet-Kabel zur direkten Verbindung mit dem Gefechtsstand aufgerollt sein können. Der Container 16 kann zudem in einem Außenraum persönliche Ausrüstungsgegenstände von Operatoren und Bedienpersonal, Erdungsvorrichten und Blitzschutzvorrichtungen aufnehmen. Der Container 16 kann im Innenraum geeignete Brandschutzmaßnahmen wie etwa Rauchmelder oder Feuerlöscher aufnehmen. Zudem kann der Innenraum des Containers 16 durch Trockenmittel gegenüber Tau oder Schwitzwasser geschützt werden.

Das MOWABS 10 umfasst generell ein in dem Container 16 angeordnetes Kommunikationssubsystem 50, eine in dem Container 16 angeordnete Schnittstellenvorrichtung 70, eine außen an dem Container 16 angebaute Sensoreinrichtung 63 in einem Sensorsystem 60, eine außen an dem Container 16 angebaute Antenneneinrichtung 40, und eine Energieversorgungseinrichtung 20. Ferner kann das MOWABS 10 eine außen an dem Container 16 angebaute Klimaanlage 30 mit einem Bedienpanel 31 umfassen, welche dazu ausgelegt ist, den Container 16 zu klimatisieren. Darüber hinaus kann das MOWABS 10 ein außen an dem Container 16 an der Sensoreinrichtung angebautes Navigationsgerät 14 aufweisen.

Der Container 16 kann über eine an der Unterseite des Containers 16 montierte Adaptervorrichtung 17 auf einem Kraftfahrzeug oder einem Kraftfahrzeuganhänger montiert werden.

Das Kommunikationssubsystem 50 kann einen Kommunikations- und Routingrechner 51, einen IT-Sicherheitscontroller 52 mit einer Zeitsynchronisierungseinheit und eine Administratorkonsole aufweisen. Dabei kann eine nicht gehärtete Variante eines Kommunikationssubsystems 50 gewählt werden, da sie sich im Inneren des Containers 16 befindet. Das Kommunikationssubsystem 50 stellt ein transparentes, IP-basiertes Netzwerk zur Verfügung, in dem Domänen unterschiedlicher Sicherheitsstufen integriert sind. Der Kommunikations- und Routingrechner 51 kann Anwendungssoftware für NAT-Routing, VoIP-Telekommunikationsanlage, Netzwerkmanagement, Statusüberwachung, und Fernwartungszugriff aufweisen. Ferner kann ein Switch mit elektrischen und optischen Anschlüssen vorgesehen werden, welcher eine Anbindung aller Domänenkomponenten ermöglicht. Außerdem kann das Kommunikationssubsystem 50 über ein Schlüsselgerät, einen Analog-Telefon-Adapter und eine Spannungs- und Stromverteilungseinheit verfügen.

Das Kommunikationssubsystem 50 beinhaltet ein Funkgerät, welches Punkt-zu-Punkt- sowie Punkt-zu-Mehrpunkt-Verbindungen aufbauen kann, OFDM-Verfahren zur drahtlosen Hochgeschwindigkeitsdatenübertragung unterstützt, militärisch relevante Frequenzbänder unterstützt, geringe Latenz für bandbreitenintensive Echtzeitanwendungen aufweist, eine erweiterte Störerunterdrückung mit automatischer Sendeleistungsregelung und adaptiver Modulation beinhaltet, zusammen mit Funkantennen (Sektor-, Richtfunk- oder Stabantenne) betrieben werden kann, eine Antennenausrichtungseinheit aufweist sowie ein geringes Gewicht und eine geringe Größe für eine direkte Montage an einem Antennenmast aufweist.

Das Funkgerät des Kommunikationssubsystems 50 kann beispielsweise an einem Antennenmast der Antenneneinrichtung 40 zusammen mit einer in der Antenneneinrichtung 40 umfassten Funkantenne 43 montiert werden. Die Funkantenne (Sektor-, Richtfunkantenne) kann dabei mittels des Antenneneinrichtungsbedienpanels 41 der Antenneneinrichtung 40 elektrisch im Azimutwinkel und im Elevationswinkel ausrichtbar sein. Die Antenneneinrichtung 40 steht mit dem Kommunikationssubsystem 50 über eine diskrete Datenbusleitung in kommunikativer Verbindung.

Die Antenneneinrichtung 40 kann ein Antennenfunkgerät 42, zumindest eine Funkantenne 43 und ein Antenneneinrichtungsbedienpanel 41 aufweisen. Mehrere Sektorantennen oder Richtfunkantennen werden vorzugsweise dann verwendet, wenn mehrere Gefechtsstände parallel in Echtzeit mit Bild-/Videodaten beispielsweise über ein Weitbereichsfunknetz versorgt werden müssen. Funkantennen 43 können zusammen mit dem Funkgerät des Kommunikationssubsystems 50 an einem zumindest 10 Meter hohen Rohrmast mit zugehöriger Aufrichteinheit montiert werden. Die Aufrichteinheit kann den Antennenmast in Betriebsstellung (senkrecht zum Container) oder in Transportstellung (waagerecht zum Container) heben bzw. kippen. In der Betriebsstellung kann der Antennenmast entsprechend nivelliert werden. Eine Teleskopfunktion des Antennenmastes ermöglicht die kontinuierliche Verstellung der Masthöhe. Ein mobiles Bedienpanel im Innenraum des Containers 16 kann zur Bedienung des Antennenmastes eingesetzt werden, auf dem zusätzlich Betriebsinformationen der Antenneneinrichtung 40 angezeigt werden können. Der Antennenmast kann mit elektrischer Energie betrieben werden, so dass keine Hydraulik oder Pneumatik notwendig ist. Das Antennenfunkgerät 42 und die Funkantenne 43 können auf dem außen am Container 16 angebrachten Antennenmastsystem an der Spitze angebracht werden.

Die Energieversorgungseinrichtung 20 weist eine Energiequelle 23 auf und ist dazu ausgelegt, die Sensoreinrichtung 63, das Kommunikationssubsystem 50 und die Antenneneinrichtung 40 mit elektrischer Energie zu versorgen. Dazu kann das Energieversorgungssystem 20 über eine vibrationsarme Brennstoffzelle mit einer daran angeschlossenen nicht-unterbrechbaren Batterie als Energiequelle 23 verfügen, die die elektrische Energie in ein Stromnetz P des MOWABS 10 einspeist. Aus dem Stromnetz können die jeweiligen anderen Komponenten des MOWABS mit Energie versorgt werden.

Die Energieversorgungseinrichtung 20 weist zudem eine Energieversorgungsmanagementkomponente 22 und ein Energieversorgungseinrichtungsbedienpanel 21 auf. Die Energieversorgungsmanagementkomponente 22 ermöglicht die manuelle und automatische Steuerung der Stromversorgung, der Klimatisierung über die Klimaanlage 30, der Schnittstelleneinrichtung 70, des Antennenmastes, des Kommunikationssubsystems 50 und der Beleuchtung des Containers 16. Damit dient die Energieversorgungsmanagementkomponente 22 als Containersteuergerät. Die Energieversorgungsmanagementkomponente 22 unterhält eine Ethernetverbindung zum Kommunikations- und Routingrechner 51 des Kommunikationssubsystems 50 und zur Schnittstelleneinrichtung 70, um eine Fernwartung, Fernkonfiguration und einen Datentransfer zu ermöglichen. Die Datenkommunikation kann dabei bevorzugt paketbasiert erfolgen, beispielsweise in einem Zeitmultiplexübertragungsverfahren (TDMA) oder einem Codemultiplexverfahren (CDMA). Die Energieversorgungsmanagementkomponente 22 kann sicherstellen, dass der Innenraum des Containers 16 ausreichend durch die Klimaanlage 30 klimatisiert ist, bevor die installierten elektrischen Komponenten aktiviert werden, um für betriebsfähige Umweltbedingungen zu sorgen.

Die Stromversorgung über die Energiequelle 23 kann vorzugsweise durch eine vibrationsarme Brennstoffzelle, eine Verteilereinheit und einen Akkumulator gewährleistet werden. Die Komponenten sind durch ein Dämpfungssystem mit dem Container 16 verbunden, um die Übertragung von Vibrationen auf den Container 16 und damit auf die multispektrale Sensorik zu vermeiden. Die Brennstoffzelle kann mit Methanol betrieben werden, ist akustisch ab einer Entfernung von etwa sieben Metern nicht mehr wahrnehmbar, erzeugt kaum detektierbare Emissionen und ist wartungsarm. Die Energiequelle 23 ermöglicht einen autonomen Betrieb für mindestens 32 Stunden ohne Eingriff durch einen Operator und kann von außen mit Spannungen alternativ zur eigenen Spannungsversorgung versorgt werden. Der Wechsel von der eigenen Brennstoffzellspannung zu einer externen Spannungsversorgung und umgekehrt ist dabei unterbrechungsfrei möglich. Es erfolgt hierbei ein automatischer Wechsel im Falle des Spannungsverlustes der aktuellen Quelle oder ein manueller Wechsel mit Hilfe des Energieversorgungseinrichtungsbedienpanels 21. Ferner kann die Energiequelle 23 Hilfsspannung über einen Hilfsspannungsanschluss 11 nach außen liefern und verfügt über einen Not-Aus-Schalter, mit dem die Energiequelle 23 im Notfall deaktiviert werden kann, wenn der Schalter betätigt wird. Der Not-Aus-Schalter kann beispielsweise ein roter Knopf sein.

Die Klimaanlage 30 mit dem Bedienpanel 31 hält Temperatur und Feuchtigkeit im Containerinneren im für den Betrieb der elektrischen Komponenten zulässigen Bereich. Die Klimaanlage 30 liefert zudem Frischluft über einen Staub-/NBC-Filter in den Innenraum des Containers 16. Die Klimaanlage 30 sorgt für die Wärmeleistung aus dem Innenraum des Containers 16 nach außen und ist durch ein Dämpfungssystem mit dem Container 16 verbunden.

Die Schnittstelleneinrichtung 70 kann ein lokales Display 71 für einen Operator aufweisen. Neben der Möglichkeit der Umschaltung zwischen lokalem und ferngesteuertem Betrieb der Komponenten des MOWABS 10 ermöglicht die Schnittstelleneinrichtung 70 eine geordnete Deaktivierung aller Komponenten. In einem entnehmbaren und über USB oder SATA auslesbaren Speicher (z.B. ein Flash-SSD) der Schnittstelleneinrichtung 70 können verschiedene Betriebsparameter mit Zeitstempeln gespeichert werden, wie etwa Betriebsstunden, Sensorstatus, Fehlercodes, Fehlerbilder, Logdateien von Fehlfunktionen, Testergebnisse, Videos, Snapshots, Konfigurationsdaten, Prognostikdaten sowie unterschiedliche Versionen der Betriebssoftware.

Die Schnittstelleneinrichtung 70 kann ferner eine Energieverteilungseinheit aufweisen, die die verfügbare Leistung auf die Elemente des Sensorsystems 60 verteilen kann. Die Schnittstelleneinrichtung 70 kann des Weiteren als zentrale Verteilerstelle für Daten von dem und für das Sensorsystem 60 dienen und kann hierzu über eine kabelgebundene Datennetzverbindung E mit anderen Komponenten des MOWABS 10 in kommunikativer Verbindung stehen. Die kabelgebundene Datennetzverbindung E kann dabei beispielsweise eine EthernetVerbindung sein, die über einen zentralen Datenbus D innerhalb des MOWABS 10 zwischen den jeweiligen Knoten vermittelt wird.

Das Navigationsgerät 14 kann beispielsweise eine Trägheitsmesseinheit ("inertial measurement unit", IMU) aufweisen, die lineare, inertiale, sensorfeste Beschleunigungsmessgeräte und sensorfeste Winkelgeschwindigkeitsmessgeräte umfassen kann. Das Navigationsgerät 14 kann zudem Satellitensignale eines globalen Positionierungssystems wie etwa GPS, Galileo oder GLONASS verarbeiten. Eine Antenne des globalen Positionierungssystems kann zusammen mit dem Navigationsgerät 14 in ein Kopflastrahmengestell eingebaut sein, das auf der Sensorhubvorrichtung 66 montiert ist, so dass eine gute Sichtbarkeit der Navigationssatelliten gewährleistet ist.

Die Sensorhubvorrichtung 66 ist Teil des Sensorsystems 60 und trägt die multispektrale Sensoreinrichtung 63, welche einen oder mehrere Infrarotsensoren, einen Videokamera bzw. einen VIS-Sensor und einen Laserentfernungsmesser aufweist und welche eine Dämpfungsvorrichtung besitzt, die die Übertragung von Vibrationen auf die Sensorik konstruktiv abfängt.

Die Sensorhubvorrichtung 66 steht mit dem Kommunikationssubsystem 50 über eine kabelgebundene Datenbusverbindung E in kommunikativer Verbindung. Wie in Fig. 1 gezeigt, kann das Sensorsystem 60 komplett an den Container 16 des MOWABS 10 integriert werden.

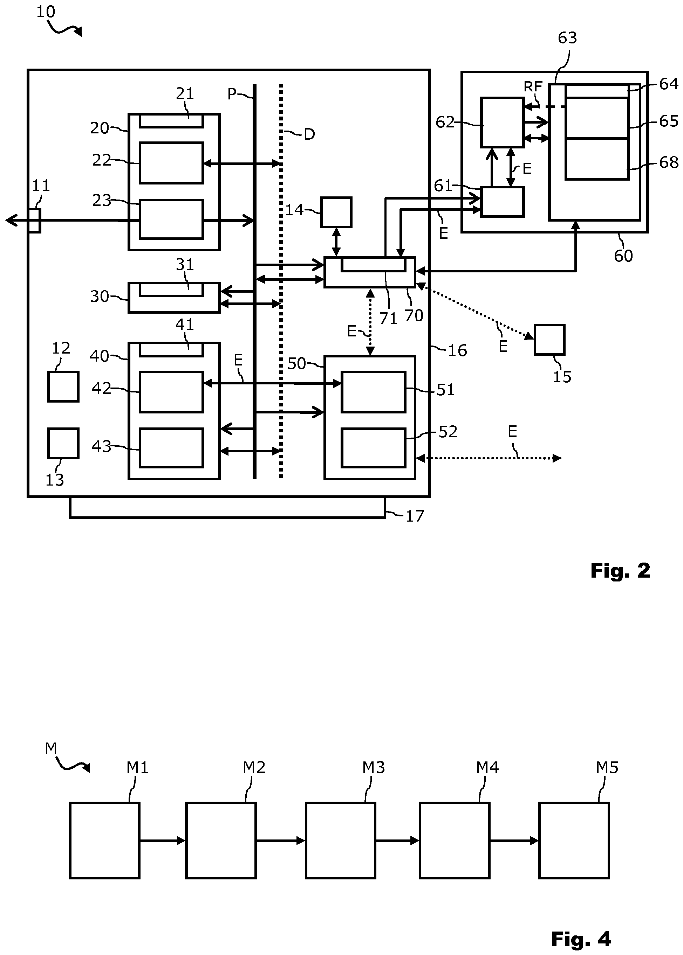

In anderen Varianten (wie in Fig. 2 beispielhaft dargestellt) können zusätzlich oder alternativ Sensorsysteme 60 als abgesetzte Dreibeinvorrichtungen außerhalb des Containers 16 eingesetzt werden. In diesem Fall kann eine Kabelverbindung von bis zu 100 Metern zwischen der Schnittstelleneinrichtung 70 im Container 16 und dem Sensorsystem 60 eingerichtet werden, um die Sensorik schwankungs- und vibrationsarm betreiben zu können, beispielsweise bei starkem Wind oder Böen oder bei einem Erreichen einer günstigeren Tarnung des Sensorsystems 60 im Gelände. Im Falle eines extern aufgestellten Sensorsystems 60 wird statt der Sensorhubvorrichtung 66 ein Dreibein 68 eingesetzt, welches die Sensoreinrichtung 63 trägt.

Die Sensorhubvorrichtung 66 ist ein Spindelmastsystem und ist an der Rückseite des Containers 16 an der Außenwand neben der Tür montiert. Ein Bedienpanel 67 hierzu befindet sich im Innenraum des Containers 16. Mittels einer eingebauten Kurbel kann ein manueller Notbetrieb eingerichtet werden. Die Höhe beträgt im eingefahrenen Zustand etwa 1,7 Meter, im ausgefahrenen Zustand maximal 8 Meter. Die maximale Kopflast der Sensorhubvorrichtung 66 kann etwa 250 kg betragen. Ein Energie- und Datenverteilermodul 61, ein daran angeschlossenes Sensorsteuergerät 62, die Sensoreinrichtung 63 und eine Navigationsantenne 64 werden in einem Rahmengestell der Sensorhubvorrichtung 66 als Kopflast aufgenommen. Dadurch wird eine flexible Aufrichtung aller Sensorkomponenten über das Containerdach hinaus ermöglicht, wodurch sich Deckungs- und Tarnungsmöglichkeiten für den Container ergeben.

Das Sensorsystem 60 umfasst eine multispektrale Zieldetektions- und - verfolgungssensorik, die als offene Plattform ausgelegt ist, und eine VIS-Kamera, die als Farb- oder Schwarzweisskamera ausgeprägt sein kann, mindestens eine Infrarotkamera und einen augensicheren Laserentfernungsmesser. Die Zieldetektions- und -verfolgungssensorik ermöglicht die Fernsteuerung der Sensorik vom Gefechtsstand aus sowie eine Installation auf einem Dreibein.

Eine stabilisierte Schwenk- und Neigeeinheit 65 ("Pan-and-Tilt"), welche für die mechanische 2-Achsenstabilisierung in der Sensoreinrichtung 63 vorgesehen ist, weist beispielsweise eine Sichtlinienbeweglichkeit von Azimut n x 360° und Elevation von -120° bis 90° auf. Die Schwenk- und Neigeeinheit 65 ist eine offene Plattform zur Aufnahme von Nutzlasten und ist leicht zu montieren bzw. zu demontieren. Die Schwenk- und Neigeeinheit 65 kann aus zwei Komponenten bestehen: ein 2-Achsengimbalblock mit elektromechanischen Azimut-/Elevationsantrieben, Sensorik und Bremsen sowie ein Elektronikbaustein mit Stromversorgung, Achsensteuerung und Kommunikationsschnittstellen.

Die Infrarotkameras können jeweils in verschiedenen Infrarotbereichen von etwa 0,78 bis 1,4 (NIR) oder 1,4 bis 3 µm (SWIR) oder 3 bis 8 µm (MWIR) oder 8 bis 15 µm (LWIR) arbeiten und sind speziell für große Reichweiten im Tag-/Nachtbetrieb auch unter ungünstigen Witterungsbedingungen einsetzbar. Eine Infrarotkamera kann entsprechend gehärtet sein ("ruggedized"). Die Videokamera bzw. der VIS-Sensor kann speziell für große Reichweiten bei Tageslicht und/oder Dämmerung konzipiert werden bei einer spektralen Empfindlichkeit von 400 bis 760 nm. Die Videokamera bzw. der VIS-Sensor kann einen CCD-Bildverarbeitungschip einsetzen und eine fokale Länge von 50 bis 1550 mm aufweisen. Der Laserentfernungsmesser ist an die Sichtlinie des VIS-Sensors angepasst und kann bei einer Wellenlänge von beispielsweise 1,535 µm betrieben werden, wie etwa ein Erbiumfaserlaser.

Das Sensorsteuergerät 62 dient der übergeordneten Steuerung der zumindest einen Infrarotkamera, des VIS-Sensors und des Laserentfernungsmessers und kann eine Video- bzw. Infrarottrackingfunktion aufweisen. Dabei können eine elektronische Bildstabilisierung, eine bedienergesteuerte Bildfusion der Infrarot- und VIS-Sensorik sowie gegebenenfalls weitere Bildmanipulationen in dem Sensorsteuergerät 62 durchgeführt werden. Das Energie- und Datenverteilermodul 61 kann eine Datenschnittstelle (beispielsweise Ethernet) zur Schnittstelleneinrichtung 70 bereitstellen, um mit selbiger über eine kabelgebundene Datennetzverbindung E in kommunikativer Verbindung stehen zu können. Das Energie- und Datenverteilermodul 61 sorgt zudem für die Energieverteilung der Energieversorgungseinrichtung 20 an die Sensoren in dem Sensorsystem 60.

Über die übergeordnete Steuerung der Infrarotkamera, des VIS-Sensors und des Laserentfernungsmessers hinaus kann das Sensorsteuergerät 62 eine digitale Assistenzfunktion beim Video- bzw. Infrarottrackingfunktion aufweisen. Diese digitale Assistenzfunktion kann eine maschinelle, automatisierte Diskrimination, Klassifikation und Identifikation von durch das Sensorsystem beobachteten Objekten durchführen, um den Feuerleitenden im Gefechtsstand zu unterstützen und zu entlasten.

Das Sensorsteuergerät 62 weist hierzu ein oder mehrere Inferenz-Engines (Verarbeitungsmodule) auf, die Bildinformationen der Sensoreinrichtung 63 sensorspezifisch in Echtzeit oder zumindest echtzeitnah (d.h. mit mindestens einem Bild pro Sekunde) durch maschinelle Objekterkennung verarbeiten. Die Inferenz-Engines können hierzu durch überwachtes Lernen ("embedded deep learning") trainierbar sein. Für die maschinelle Verarbeitung der Bilddaten der Sensoreinrichtung 63 werden neuronale Faltungsnetzwerke ("convolutional neural networks", CNN) eingesetzt, welche valide Klassifikations- und Identifizierungsergebnisse liefern, wenn beispielsweise eine konfigurierbare Erkennungsschwelle überschritten worden ist. Die Klassifikations- und Identifizierungsergebnisse werden durch das Sensorsteuergerät 62 an die Schnittstelleneinrichtung 70 übergeben, von wo aus sie gemeinsam mit den Bild- und Videodaten an den Gefechtsstand übertragen werden können.

Im Gefechtsstand kann eine geeignete Mensch-Maschine-Schnittstelle implementiert werden, welche textuelle und/oder symbolische Ausgabesignale zu den erhaltenen Klassifikations- und Identifizierungsergebnissen an einer Ausgabeeinheit des Feuerleitenden ausgibt. Beispielsweise können Indikatoren über das Vorliegen einer Objektdetektion, einer erkannten Objektklasse mit zugehörigem Konfidenzwert, eines erkannten Objekttyps mit zugehörigem Konfidenzwert oder ein Indikator hinsichtlich eines Vorschlags für eine Zielbekämpfungseinleitung bzw. -vermeidung an einem Bildschirm im Gefechtsstand des Feuerleitenden parallel zum Echtzeitvideostream angezeigt werden. Die bedienerunabhängige Einbindung in den Bekämpfungsprozess eines vollautomatischen Gefechtsmodus kann dann erfolgen, wenn sich die Klassifikations- und Identifizierungsergebnisse der Inferenz-Engines des CDI-Assistenten als hinreichend zuverlässig erwiesen haben.

Für die Objekterkennung im Luftfahrzeugbereich können verschiedene Klassen wie etwa zivile Verkehrsflugzeuge, Jagdbomber, militärische Transportflugzeuge, Drohnen, Marschflugkörper, Hubschrauber oder ähnliches diskriminiert werden, die sich in ihren wesentlichen Merkmalen signifikant unterscheiden. Dabei können je nach Klasse verschiedene Typen identifiziert werden, die im militärischen Kontext einer mobilen optischen Weitbereichsaufklärungs- und -beobachtung missionsspezifisch relevant sein können. Jeder Klasse bzw. jedem Typ kann eine einsatzabhängige Einstufung zugeordnet werden, wie etwa "Freund", "Feind" oder "unklar".

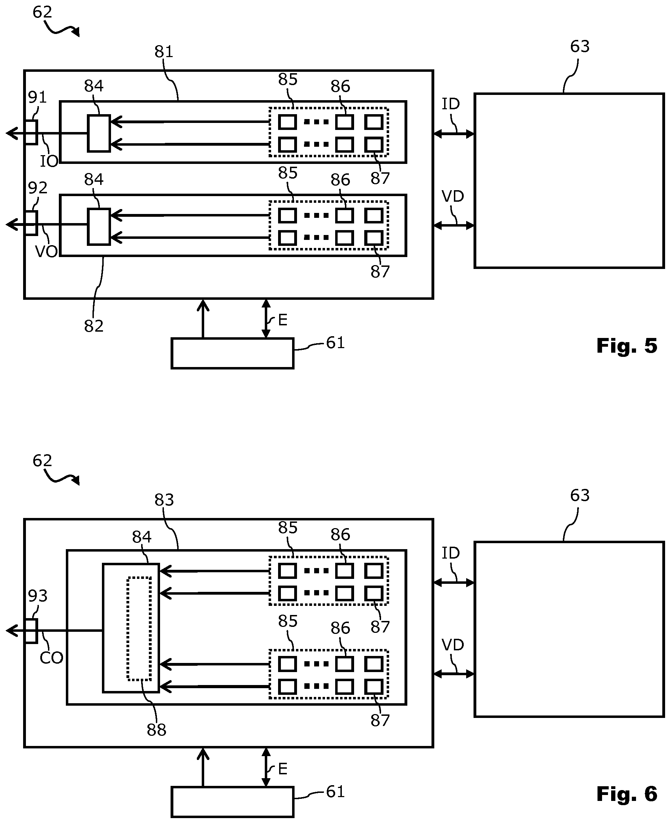

Mögliche Konfigurationen einer digitalen Assistenzfunktion in einem Sensorsteuergerät 62 werden weiter unten im Zusammenhang mit den Fig. 5 und 6 in genauerem Detail erläutert.

Das MOWABS 10 ist prinzipiell in zumindest fünf verschiedenen Konfigurationen einsetzbar. Zunächst kann das MOWABS mittels des Kommunikationssubsystems 50 über eine Funkverbindung RF direkt oder über eine Relais-Station wie beispielsweise eine Flugabwehrkörperabschusseinrichtung 3 in großer Entfernung an einen Gefechtsstand 1 angebunden werden. Dabei kann die Kommunikation verschlüsselt erfolgen. Über die Sensorhubvorrichtung 66 kann die Sensorik in eine entsprechende Erfassungshöhe über dem Container 16 angehoben werden und beispielsweise über Spannseile abgespannt werden, um eine möglichst stabile Sichtlinie auf das Flugziel zu gewährleisten und um den Container 16 Deckungs- und Tarnungsschutz zu ermöglichen, auch unter widrigen Witterungsbedingungen wie etwa starkem Wind oder Böen, die den Container 16 aufgrund der großen Seitenfläche Schwankungen unterwerfen können.

Bei zu starkem Wind oder zu starken Böen kann eine Konfiguration mit abgesetztem Dreibein 68 favorisiert werden, wobei die Sensorik nicht auf die Sensorhubvorrichtung 66 montiert wird, sondern auf dem Dreibein 68, um Schwankungen und Vibrationen zu unterdrücken. Die Schnittstelleneinrichtung 70 befindet sich dabei weiterhin im Innenraum des Containers 16 und wird über eine kabelgebundene Verbindung (Strom und Datennetzwerkverbindung wie etwa Ethernet) an das Energie- und Datenverteilermodul 61 des Sensorsystems 60 angeschlossen. Das MOWABS 10 ist wie in der oben genannten Konfiguration mittels des Kommunikationssubsystems 50 per Funkverbindung an den Gefechtsstand 1 angebunden. Die Kommunikation zwischen Gefechtsstand 1 und Kommunikationssubsystem 50 kann dabei verschlüsselt erfolgen, die zwischen Sensorsystem 60 und Container 16 hingegen unverschlüsselt.

Des Weiteren ist es in einer dritten Konfiguration auch möglich, dass die Sensorik des Sensorsystems 60 auch direkt an den Gefechtsstand 1 angebunden sind und dadurch gegebenenfalls unverschlüsselt kommunizieren können. Diese Konfiguration wird allerdings hauptsächlich zur Nahfeldbodenüberwachung der Umgebung des Gefechtsstandes 1 eingesetzt werden. Die Sensorik des Sensorsystems 60 ist dabei quasi-stationär positioniert und ist daher keinen nennenswerten Vibrationen sowie Schwankungen durch Wind oder Böen ausgesetzt.

In einer vierten Konfiguration kann das Kommunikationssubsystem 50 direkt über Kabel an ein Kommunikationssubsystem eines Startgerätes oder eines Radargerätes angeschlossen werden. Dabei übermittelt das MOWABS 10 selbst Daten nicht direkt, sondern lediglich indirekt das Kommunikationssubsystem des Startgerätes oder des Radargerätes, an das das Kommunikationssubsystem 50 per Kabel angebunden ist. In einer fünften Konfiguration schließlich kann das Sensorsystem 60 wie in der dritten Konfiguration per Kabel an eine Komponente des Luftverteidigungssystems angebunden werden, aber nicht an den Gefechtsstand 1 direkt, sondern beispielsweise an ein Startgerät oder ein Radargerät, welches wiederum, wie in der vierten Konfiguration, als Relais-Station fungiert.

Bei einer Aktivierung des MOWABS 10 werden zunächst Initialisierungs- und Testphasen durchlaufen, in der diverse Tests der Kommunikations- und Funktionsfähigkeit der Komponenten des MOWABS 10 überprüft werden. Erst danach kann in den Bereitschaftsmodus umgeschaltet werden, in dem der Feuerleitende im Gefechtsstand die Kontrolle über das MOWABS 10 erhält und über Bedienelemente im Gefechtsstand die Komponenten des MOWABS 10 fernsteuern kann. So kann der Feuerleitende durch entsprechende Nutzerfunktionen das Online-Bild / Video (z.B. Zoomfunktion, Videotracking, Snapshot, Ausrichtung der Sensorik, Sensorauswahl und -fusion etc.) nach seinen Wünschen beeinflussen. Der Feuerleitende kann dann aus den Funktionen einer manuellen Zielzuweisung und einer Systemzielzuweisung wählen, in denen die lokalen Sichtlinienwinkel durch den Operator oder automatisch durch das System berechnet werden. In beiden Fällen kann danach in den Modus der Zieldetektion geschaltet werden. Die Objektdetektion erhält die Kontrolle über die relevanten Bildparameter der Sensorik des Sensorsystems 60 und versucht, Objekte in der jeweils im Ziel befindlichen Szene zu erkennen. Die erkannten Objekte werden in erzeugten Standbildern und im Videobilddatenstrom markiert. Die Klassifikations- und Identifikationsergebnisse der Inferenz-Engines werden an den Gefechtsstand übermittelt. Auf das Objekt, welches der Sichtlinienrichtung in der Szene am nächsten ist, wird der Zieltracker des Sensorsteuergerätes 62 gesetzt.

Im Zieltracking verfolgt das Sensorsteuergerät 62 das zugewiesene Ziel und führt die Sichtlinie in Azimut und Elevation automatisch nach, so dass das Ziel im Bildzentrum gehalten wird. Das verfolgte Objekt wird durch den Laserentfernungsmesser der Sensoreinrichtung 63 automatisch und periodisch in seiner Entfernung vermessen. Die gemessenen lokalen Zielsichtlinienwinkel und die gemessene lokale Entfernung werden in erdfeste Koordinaten umgerechnet und entsprechend mit weiteren Zielattributen angereichert an den Gefechtsstand als 3D-Zieltrack übermittelt, falls die Entfernungsmessung deaktiviert ist, werden 2D-Zieltracks als erdfeste Winkelinformation an den Gefechtsstand übertragen. Der Feuerleitende kann während des Zieltrackings Zielkorrekturfunktionen ausführen, indem er manuell ein anderes Objekt als Ziel im übertragenen Echtzeitvideo zuweist, das Zieltracking abbricht oder eine Neuausrichtung der Sichtlinie auf ein neues Objekt im übertragenen Echtzeitvideo zwecks Zielwechsel vornimmt.

Wenn ein MOWABS 10 in einem Luftverteidigungssystem eingesetzt wird, kann ein passiver Gefechtsmodus (Silent Engagement Mode) aktiviert werden, indem das MOWABS 10 ein Ziel detektiert und verfolgt, ohne dass ein Radargerät des Luftverteidigungssystem sendet. Wenn eine visuelle Klassifikation des Ziels durch den Bediener mit Unterstützung des CDI-Assistenten im Gefechtsstand erfolgt und das Ziel als "feindlich" identifiziert worden ist, kann das Radargerät erst knapp vor dem errechneten Start eines Abfangflugkörpers aktiviert und durch das MOWABS 10 auf das Ziel eingewiesen werden. Erst dann schaltet das Radargerät das Ziel auf und die Gefechtsphase wird initiiert. Dadurch besteht der Vorteil, dass durch eine möglichst lange passive Phase des Radargeräts ein Ziel erst spät erkennt, dass es durch ein Luftverteidigungssystem erfasst worden ist. Elektronische Abwehrmaßnahmen des Ziels werden dadurch erschwert. Auch eine elektronische Aufklärung des Luftverteidigungssystems wird durch diese visuelle Zieldetektion, - klassifikation und -identifikation durch das MOWABS 10 erschwert.

Über eine Fernwartung kann das MOWABS 10 getestet bzw. umkonfiguriert werden, beispielsweise unter Zuhilfenahme einer tragbaren Wartungshilfe 15, welche kabelgebunden über eine Netzwerkverbindung E an das MOWABS 10 angeschlossen werden kann und welches die Offline-Übertragung der im entnehmbaren Speicher gespeicherte Daten ermöglicht. In einem Selbstzerstörungsmodus des MOWABS 10 kann im Notfall der entnehmbare Speicher der Schnittstelleneinrichtung 70 vollständig gelöscht werden, inklusive aller Standbilder, Videobilddatenstreams sowie Daten, die einen Bezug zur Einsatzplanung und Einsatzführung aufweisen können.

Fig. 3 zeigt ein vereinfachtes Blockschaubild eines taktischen Luftverteidigungssystems mit einem Gefechtsstand 1, einem Radargerät 2, und einer Flugabwehrkörperabschusseinrichtung 3. Der Gefechtsstand 1, das Radargerät 2 und die Flugabwehrkörperabschusseinrichtung 3 können dabei in Kommunikationsverbindung miteinander stehen, beispielsweise über Funkverbindungen oder über kabelgebundene Netzwerkverbindungen wie etwa Ethernet. In Kommunikation mit dem Gefechtsstand 1 steht weiterhin ein MOWABS 10, beispielsweise über eine Funkverbindung RF. Dabei kann eine direkte Funkverbindung RF zwischen dem Gefechtsstand 1 und dem MOWABS 10 bestehen. Alternativ dazu kann auch eine Relais-Station, wie etwa die Flugabwehrkörperabschusseinrichtung 3, als Vermittler für die Funkverbindung RF des Gefechtsstandes 1 mit dem MOWABS 10 dienen.

Das MOWABS 10 kann dabei die Komponenten aufweisen, wie sie im Zusammenhang mit den Fig. 1 und 2 erläutert worden sind. Insbesondere kann die Antenneneinrichtung 40 mit einer Funkantenne für die Aufrechterhaltung der Funkverbindung RF mit dem Gefechtsstand 10 verantwortlich sein. Die über die Funkverbindung RF ausgetauschten Informationen vom und zum Gefechtsstand 10 können von der Antenneneinrichtung 40 zum und vom Sensoriksystem 60 des MOWABS 10 kommuniziert werden.

Das MOWABS 10 kann über die an der Unterseite des Containers 16 montierte Adaptervorrichtung 17 auf der Ladefläche eines (nicht explizit dargestellten) Kraftfahrzeugs wie etwa eines LKWs oder eines Kraftfahrzeuganhängers montiert werden. Dadurch ist das MOWABS 10 gegenüber dem Gefechtsstand 1 relokalisierbar und kann beispielsweise entlang einer bevorzugten Überwachungsrichtung näher an potentielle Flugziele verbracht werden. Das Kraftfahrzeug (oder der Kraftfahrzeuganhänger) kann eine fahrbare Plattform aufweisen, die über die Adaptervorrichtung 17 eine sichere mechanische Verbindung des Fahrzeugs mit dem Container 16 gewährleistet. Die Adaptervorrichtung 17 kann so ausgebildet werden, dass am hinteren Ende des Fahrzeugs die Tür des Containers 16 widerstandslos geöffnet und geschlossen werden kann. Die Adaptervorrichtung 17 kann eine Treppe, eine Leiter oder einen anderen geeigneten Containerzugang aufweisen, die während der Re-lokalisation des Containers 16 eingeklappt und verriegelt werden kann.

Das MOWABS 10 kann auf dem Kraftfahrzeug (oder dem Kraftfahrzeuganhänger) mithilfe geeigneter Verriegelungsmittel, wie etwa ISO 1161:2016 Twistlocks fixiert werden. Falls die Twistlocks nicht benutzt werden, können sie eingesteckt werden, so dass eine ebene Ladefläche auf dem Kraftfahrzeug gewährleistet ist. An dem Container 16 und/oder dem Kraftfahrzeug (oder dem Kraftfahrzeuganhänger) kann gegebenenfalls eine mechanische Libelle 12 vorgesehen werden, die dem Operator eine visuelle Information über die aktuelle Neigung des Kraftfahrzeugs (oder des Kraftfahrzeuganhängers) bereitstellt.

Das Kraftfahrzeug (oder der Kraftfahrzeuganhänger) kann über eine verschweißte Stahlkonstruktion mit Korrosionsschutz als Fahrzeugrahmen sowie gegebenenfalls eine Erdungsvorrichtung verfügen.

Fig. 4 zeigt ein Flussdiagramm eines Verfahrens M zur Steuerung eines mobilen optischen Weitbereichsaufklärungs- und -beobachtungssystems (MOWABS), wie beispielsweise des MOWABS 10 wie im Zusammenhang mit den Fig. 1 und 2 dargestellt und erläutert. Das Verfahren M kann beispielsweise in einem taktischen Luftverteidigungssystem eingesetzt werden, welches ein MOWABS 10 als ein Element aufweist.

Das Verfahren M umfasst in einer ersten Stufe M1 zunächst ein Koppeln eines Kommunikationssubsystems 50 mit einer Schnittstellenvorrichtung 70 über eine kabelgebundene Datennetzverbindung E. In einer Stufe M2 erfolgt ein Koppeln einer mindestens einen Infrarotsensor, einen VIS-Sensor und einen Laserentfernungsmesser aufweisenden Sensoreinrichtung 63 mit der Schnittstellenvorrichtung 70 über eine kabelgebundene Datennetzverbindung E. Dann wird in einer Stufe M3 eine automatischen Objekterkennung in Bilddaten des Infrarotsensors und des VIS-Sensors mit Hilfe eines neuronalen Faltungsnetzwerkes durchgeführt, deren Ergebnisse als Informationen über automatisch erkannte Objekte an das Kommunikationssubsystem 50 in einer Stufe M4 übermittelt werden. Die Sensoreinrichtung 63, das Kommunikationssubsystem 50 und gegebenenfalls weitere Komponenten werden in einer Stufe M5 des Verfahrens M mit elektrischer Energie aus einer Energiequelle 23 einer Energieversorgungseinrichtung 20 versorgt.

Das Kommunikationssubsystem kann einen Kommunikations- und Routingrechner, einen IT-Sicherheitscontroller mit einer Zeitsynchronisierungseinheit und eine Administratorkonsole aufweisen. Die Antenneneinrichtung kann ein Antennenfunkgerät, zumindest eine Funkantenne und ein Antenneneinrichtungsbedienpanel aufweisen. Die Energieversorgungseinrichtung kann eine Energieversorgungsmanagementkomponente und ein Energieversorgungseinrichtungsbedienpanel aufweisen. Dabei kann die Energiequelle eine Brennstoffzelle mit einer daran angeschlossenen nicht-unterbrechbaren Batterie aufweisen.

Bilddaten des Infrarotsensors und des VIS-Sensors können in manchen Varianten in separaten Verarbeitungsmodulen 81 und 82 verarbeitet werden. Dabei wird mit Hilfe eines ersten neuronalen Faltungsnetzwerkes in den Bilddaten des Infrarotsensors eine automatische Objekterkennung durchgeführt. Mit Hilfe eines zweiten neuronalen Faltungsnetzwerkes wird parallel dazu in den Bilddaten des VIS-Sensors eine automatische Objekterkennung durchgeführt. Die erkannten Objekte in den Bilddaten des Infrarotsensors und in den Bilddaten des VIS-Sensors können prinzipiell unabhängig voneinander an den Gefechtsstand übermittelt werden. Es kann auch vorgesehen sein, einen Plausibilitätsabgleich der Bilddaten untereinander durchzuführen, um falsch positive bzw. falsch negative Ergebnisse bei der Objekterkennung zu vermeiden.

In manchen anderen Varianten jedoch können Bilddaten des Infrarotsensors und des VIS-Sensors in einem gemeinsamen Verarbeitungsmodul 83 (Inferenz-Engine) verarbeitet werden. Dabei wird mit Hilfe eines ersten neuronalen Faltungsnetzwerkes in den Bilddaten des Infrarotsensors eine automatische Objekterkennung durchgeführt. Mit Hilfe eines zweiten neuronalen Faltungsnetzwerkes wird parallel dazu in den Bilddaten des VIS-Sensors eine automatische Objekterkennung durchgeführt. Schließlich werden mit Hilfe eines dritten neuronalen Faltungsnetzwerkes die erkannten Merkmale der Objekte der Bilddaten des Infrarotsensors und des VIS-Sensors zu gemeinsamen Informationen über automatisch erkannte Objekte fusioniert.

Fig. 5 zeigt ein schematisches Blockschaubild eines Sensorsteuergerätes 62, welches in einem Sensorsystem 60 für ein mobiles optisches Weitbereichsaufklärungs- und -beobachtungssystem eingesetzt werden kann, wie etwa ein MOWABS 10 gemäß einer der Fig. 1 und 2.

Ein Inferenz-Engine bzw. ein Verarbeitungsmodul 81, 82 kann in einem Sensorsteuergerät 62 implementiert werden. Physikalisch gesehen besteht auch die Möglichkeit, die Verarbeitungsmodule 81, 82 als separate Hardwareeinheiten in einem separaten IT-Rack getrennt von den übrigen Komponenten des Sensorsteuergerätes 62 zu implementieren. Jedes Verarbeitungsmodul 81, 82 umfasst ein Faltungsnetzwerkmodul 85, welches ein oder mehrere neuronale Faltungsnetzwerke 86, 87 aufweist, sowie ein Steuermodul 84, welches die Ausgaben des Faltungsnetzwerkmodul 85 empfängt und Ausgabesignale IO bzw. VO im Bezug auf maschinell erkannte Objekte an Ausgabeschnittstellen 91 bzw. 92 des Sensorsteuergerätes 62 ausgibt. Die Ausgabeschnittstellen 91 und 92 können mit entsprechenden Eingangsschnittstellen einer Schnittstellenvorrichtung 70 eines MOWABS 10 verbunden werden.

Die Anzahl der in einem Verarbeitungsmodul 81, 82 installierten Faltungsnetzwerkkomponenten 86, 87 kann missionsabhängig unterschiedlich sein. Beispielsweise kann die eingesetzte Anzahl von der Anzahl der als im Einsatzgebiet des MOWABS 10 relevant eingestuften Objektklassen abhängig sein. Eine Faltungsnetzwerkkomponente implementiert dabei jeweils ein Faltungsnetzwerk, welches auf eine dezidierte Objektklasse belernt ist.

Die Faltungsnetzwerkkomponenten 86, 87 können in zwei Schichten angeordnet und verschaltet werden, von denen die erste Schicht 86 die Wahrscheinlichkeit berechnet, dass sich eine Instanz der jeweiligen Objektklasse in dem durch die Bilddaten ID des Infrarotsensors oder die Bilddaten VD des VIS-Sensors dargestellten Bild befindet. Die zweite Schicht 87 berechnet die Wahrscheinlichkeit, dass sich eine Instanz des jeweiligen Objekttyps in dem durch die Bilddaten ID des Infrarotsensors oder die Bilddaten VD des VIS-Sensors dargestellten Bild befindet. Die Ausgabeschicht der ersten Schicht 86 weist lediglich zwei Knoten auf (Objektklasse instanziert - Objektklasse nicht instanziert), während die Ausgabeschicht der zweiten Schicht 87 so viele Knoten aufweist wie Objekttypen angelernt werden. Alle Faltungsnetzwerkkomponenten 86, 87 der beiden Schichten verarbeiten jedes der Bilder gleichzeitig bzw. parallel, so dass auch erkannt werden kann, wenn sich unterschiedliche Objektklassen oder Objekttypen zur selben Zeit in einem Bild befinden.

Als Faltungsnetzwerkkomponenten 86, 87 können GPUs, TPUs ("tensor processing units"), NCS ("neural compute sticks") oder FPGAs zum Einsatz kommen. NCS bietet die Vorteile der impliziten Modularisierbarkeit und der einfachen Handhabung klassifizierter Daten. Alternativ kann es möglich sein, je eine Faltungsnetzwerkkomponente 86, 87 für je eine Ansicht eines Objekttypen von vorne, hinten, seitlich, schräg von unten und andere Ansichten entsprechend den operationell erwarteten Aspekten einzusetzen.

Das Steuermodul 84 kann einen Host-Prozessor bilden und dabei überprüfen, ob ein oder mehrere Faltungsnetzwerkkomponenten 86 der ersten Schicht eine Objektklasse oberhalb eines vorgebbaren ersten Konfidenzschwellwertes instanziert haben. In diesem Fall erfolgt pro Bild die Ausgabe des sensorspezifischen Klassifikationsergebnisses über die jeweilige Ausgabeschnittstelle 91 bzw. 92. Falls sich mehrere Objekte im Bild befinden sollten, können jeweils mehrere Klassifikationsergebnisse an die Schnittstelleneinrichtung 70 übermittelt werden.

Danach kann das Steuermodul 84 prüfen, ob ein oder mehrere Faltungsnetzwerkkomponenten 86 der ersten Schicht eine Objektklasse oberhalb eines vorgebbaren zweiten Konfidenzschwellwertes instanziert haben, wobei der zweite Konfidenzschwellwert (z.B. 95%) höher als der erste Konfidenzschwellwert (z.B. 70%) liegt. Wenn dies der Fall ist, kann zusätzlich überprüft werden, ob ein oder mehrere Faltungsnetzwerkkomponenten 87 der zweiten Schicht einen Objekttyp oberhalb eines vorgebbaren dritten Konfidenzschwellwertes instanziert haben. Eine entsprechende Ausgabe von Identifizierungsergebnissen kann wieder über die jeweilige Ausgabeschnittstelle 91 bzw. 92 erfolgen.

Die Schnittstelleneinrichtung 70 integriert die erhaltenen Klassifikationsergebnisse und Identifizierungsergebnisse in jeweils an den Gefechtsstand zu übermittelnde Botschaften und übermittelt selbige unter Zuhilfenahme der Antenneneinrichtung 40 mit einer bestimmten Wiederholrate, beispielsweise 1 Hz. Am Gefechtsstand und an einer Anzeigeeinrichtung 71 der Schnittstelleneinrichtung 70 können die Inhalte der Klassifikationsergebnisse und/oder der Identifizierungsergebnisse entsprechend textuell oder graphisch koloriert visualisiert oder in den Videostream eingebettet werden. Parallel dazu können Daten der Laserentfernungsmessung im Gefechtsstand verfügbar gemacht und auf der Anzeigeeinrichtung 71 der Schnittstelleneinrichtung 70 angezeigt werden.

Die Verarbeitungsmodule 81, 82 können vom Aufbauprinzip ähnlich bzw. baugleich gestaltet werden. Es kann dabei vorgesehen werden, ein zentrales Segmentierungsmodul, das die Bildbereiche mit potentiellen Objektkandidaten ermittelt, je Verarbeitungsmodul 81, 82 zu implementieren. Weiterhin kann auch eine multispektrale, spät fusionierte Verarbeitung von Bilddaten ID des Infrarotsensors und Bilddaten VD des VIS-Sensors erfolgen. Insbesondere VIS-Sensoren können bei Nacht oder wechselnden Beleuchtungsverhältnissen eine relativ geringe Leistungsfähigkeit aufweisen. Daher kann es von Vorteil sein, die Bilddaten VD des VIS-Sensors mit Bilddaten ID einer langwelligen Infrarotkamera (LWIR) zu fusionieren, wodurch es keiner externen Beleuchtung bedarf und die Robustheit der Objekterkennung bei widrigen Wetterbedingungen erhöht wird.

Der Gefechtsstand kann die Datenrate ermitteln, die für die Datenverbindung zwischen dem MOWABS 10 und dem Gefechtsstand aktuell verfügbar ist. Die Konfigurationsparameter für die Videodatenübertragung können entsprechend an die ermittelte Datenrate angepasst werden. Daher kann auf einen Echtzeitvideostream zugunsten von einzelnen, periodisch aktualisierten Standbildern verzichtet werden, wenn aktuell wenig Datenrate verfügbar ist.

Durch die verbesserte Klassifikations- und Identifikationsleistung kann die Wahrscheinlichkeit für Fehlbewertungen vorteilhafterweise verringert werden. Der Feuerleitende wird als letzte Entscheidungsinstanz entscheidend entlastet, sowohl in kognitiver als auch in physischer Hinsicht. Insbesondere in Situationen, in denen keine Echtzeitbildinformation im Gefechtsstand vorliegt, kann eine Gefechtsentscheidung auch unter Zuhilfenahme der maschinellen optischen Zielverifikation (Inferenz-Engine) erfolgen. Gegebenenfalls kann missionsabhängig ein Beobachter lokal am Standort des MOWABS 10 eingesetzt werden, welcher an der Anzeigeeinrichtung der Schnittstelleneinrichtung 70 die Echtzeitvideodaten bewerten und dem Feuerleitenden im Gefechtsstand beratend zur Seite steht.

Fig. 6 zeigt ein schematisches Blockschaubild einer weiteren Variante eines Sensorsteuergerätes 62, welches in einem Sensorsystem 60 für ein mobiles optisches Weitbereichsaufklärungs- und -beobachtungssystem eingesetzt werden kann, wie etwa ein MOWABS 10 gemäß einer der Fig. 1 und 2. Das Sensorsteuergerät 62 der Fig. 6 unterscheidet sich von dem Sensorsteuergerät der Fig. 5 im Wesentlichen dadurch, dass statt zweier getrennter Verarbeitungsmodule 81 und 82, die jeweils Bilddaten ID des Infrarotsensors und Bilddaten VD des VIS-Sensors verarbeiten, ein gemeinsames Verarbeitungsmodul 83 vorgesehen ist, welches die Bilddaten ID des Infrarotsensors und die Bilddaten VD des VIS-Sensors gemeinsam verarbeitet. Dabei können mehrere neuronale Faltungsnetzwerke eingesetzt werden, die verschiedene Aufgaben wahrnehmen, wie beispielsweise eine sensorspezifische Segmentierung, eine sensorspezifische Merkmalsextraktion, eine Merkmalsfusion der extrahierten sensorspezifischen Merkmale sowie eine typbasierte Identifizierung.

Das Sensorsteuergerät 62 mit dem gemeinsamen Verarbeitungsmodul 83 kann dann als Ausgangssignal für den Gefechtsstand ein Signal CO über die erkannten Merkmale der Objekte der Bilddaten ID des Infrarotsensors und der Bilddaten VD des VIS-Sensors ausgeben, welches im Sensorsteuergerätprozessor 84 fusionierte Informationen über automatisch erkannte Objekte umfasst. Das Sensorsteuergerät 62 kann dazu über eine Ausgabeschnittstelle 93 mit der Schnittstellenvorrichtung 70 verbunden werden.

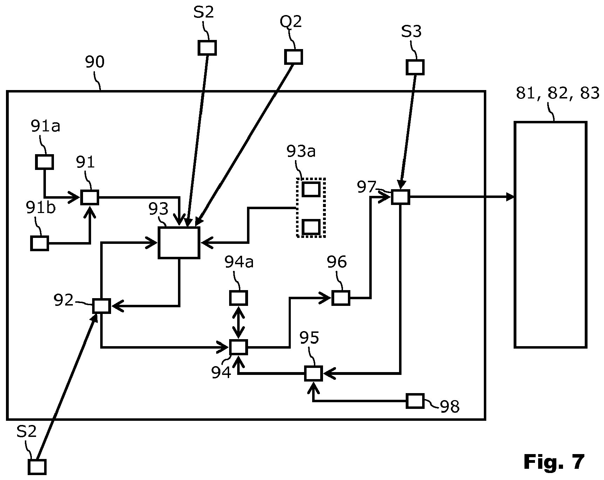

Sowohl die Verarbeitungsmodule 81 und 82 als auch das Verarbeitungsmodul 83 können über eine in Fig. 7 beispielhaft dargestellte, geeignete Design- und Trainingseinheit 90 angelernt werden. Eine derartige Design- und Trainingseinheit 90 kann beispielsweise als Host-PC aus folgenden Elementen bestehen: Trainings-Engine 94 wie etwa Graphikprozessoren oder Deep-Learning-Computern, Netzkonfigurator 95, Bibliothek zugelassener Netztypen 98, Netz-Parameterset-Datenbank 96, Prgorammiereinheit 97, Datenbank mit Trainingssets und Validationssets 92, Bildgenerator IR/VIS 91, Bildbibliothek IR/VIS 93, 3D-Objekt-Modelle 91a, Datenbank 91b mit Hintergründen, Netzanalysator 94a und Trainingssensorik 93a. Die Design- und Trainingseinheit 90 stellt ein auftragsbasiertes Trainingsbilderset sowie ein dazu passendes Validationsbilderset zusammen, wählt den Typus der eingesetzten Faltungsnetzwerke, konfiguriert die ausgewählten Faltungsnetzwerke gemäß den Einsatzregeln, lädt unselektierte, unbelernte Faltungsnetzwerke der Trainings-Engine 94 in ein entsprechendes Faltungsnetzwerkkomponentenmodul 81, 82, 83, trainiert das unbelernte Faltungsnetzwerk mit dem Trainingsset, testet das belernte Faltungsnetzwerk mit dem Validationsset in der Trainings-Engine 94, prüft das getestete Faltungsnetzwerk auf Erkennungsleistungsfähigkeit mittels des Validationssets, optimiert die Erkennungsleistungsfähigkeit durch Visualisierung des Klassifizierungsprozesses mittels Netzanalysator 94a, optimiert die Erkennungsleistungsfähigkeit und importiert die Faltungsnetzwerk-Parameter zusammen mit dem ausgewählten, unbelernten Faltungsnetzwerk in die Programmiereinheit 97. Die Trainingssets und Validationssets können auf der Basis der operationellen Erfahrungswerte sowie der ständigen Verbreiterung des verfügbaren realen und synthetischen Bildmaterials kontinuierlich verbessert und aktualisiert werden. Neu erscheinende Boden-, See- und Flugobjekte, beispielsweise aus einer militärischen Aufklärung S2 oder einer Operationsplanung S3, werden dabei in das verfügbare Bildmaterial aufgenommen und deren Bildbasis synthetisch erweitert. Weiteres Bildmaterial kann auch aus kommerziellen Quellen Q2 aufgenommen werden. Die Parameter, Gewichte und Vorverzerrungen der verifizierten, belernten Faltungsnetzwerke werden in der Datenbank für Netzparameter verwaltet und bei einem Erreichen des geforderten Qualitätsniveaus für einen Einsatz freigegeben.

Die Design- und Trainingseinheit 90 und die Inferenz-Engines bilden zusammen ein militärisches Framework, nämlich den CDI-Assistenten. Die Design- und Trainingseinheit 90 ist hierbei ein Teil der Einsatzplanung (Force Operations) eines LVS und der oder die Inferenz-Engines (Verarbeitungsmodule 81, 82, 83) bzw. das Sensorsteuergerät 62 sind zur Einsatzführung (Engagement Operations) des LVS zugehörig. Ein Sensorsteuergerät 62 kann über eine oder mehrere Inferenz-Engines verfügen. Eine Inferenz-Engine umfasst mindestens ein Steuermodul 84 und ein oder mehrere neuronale Faltungsnetzwerke 86, 87. Die Art und Anzahl der Inferenz-Engines und der zugehörigen neuronalen Faltungsnetzwerke 86, 87 können missions- und sensorspezifisch (Spektralbereich) konfiguriert werden, ebenso die Fusion von sensorspezifischen Merkmalen innerhalb einer Inferenz-Engine.
In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

## Patentansprüche

1. Mobiles optisches Weitbereichsaufklärungs- und -beobachtungssystem (MOWABS, 10), umfassend:
ein Kommunikationssubsystem (50); eine Schnittstellenvorrichtung (70), welche mit dem Kommunikationssubsystem (50) über eine kabelgebundene Datennetzverbindung (E) in kommunikativer Verbindung steht;
ein Sensorsystem (60) mit einer Sensoreinrichtung (63), welche mit der Schnittstellenvorrichtung (70) über eine kabelgebundene Datennetzverbindung (E) in kommunikativer Verbindung steht sowie mindestens einen Infrarotsensor, einen VIS-Sensor und einen Laserentfernungsmesser aufweist, und mit einem Sensorsteuergerät (62), welches dazu ausgelegt ist, Bilddaten des Infrarotsensors und des VIS-Sensors zu empfangen, mit Hilfe mindestens eines neuronalen Faltungsnetzwerkes in den empfangenen Bilddaten eine automatische Objekterkennung durchzuführen und Informationen über automatisch erkannte Objekte an das Kommunikationssubsystem (50) zu übermitteln;
eine Antenneneinrichtung (40), welche mit dem Kommunikationssubsystem (50) über eine Funkverbindung (RF) in kommunikativer Verbindung steht und dazu ausgelegt ist, die Informationen über automatisch erkannte Objekte per Funkverbindung (RF) an einen Gefechtsstand (1) zu übermitteln; und eine Energieversorgungseinrichtung (20), welche eine Energiequelle (23) aufweist und welche dazu ausgelegt ist, das Sensorsystem (60), das Kommunikationssubsystem (50) und die Antenneneinrichtung (40) mit elektrischer Energie zu versorgen.

2. MOWABS (10) gemäß Anspruch 1, weiterhin mit:
einem Container (16), in welchem das Kommunikationssubsystem (50) und die Schnittstellenvorrichtung (70) angeordnet sind; und
einer außen an dem Container (16) angebauten Klimaanlage (30), welche dazu ausgelegt ist, den Container (16) zu klimatisieren.

3. MOWABS (10) gemäß Anspruch 2, weiterhin mit:
einem an der Sensoreinrichtung (63) angebauten Navigationsgerät (14),
welches mit der Schnittstellenvorrichtung (70) über eine kabelgebundene Datennetzverbindung (E) in kommunikativer Verbindung steht.

4. MOWABS (10) gemäß einem der Ansprüche 1 bis 3, weiterhin mit:
einer Sensorhubvorrichtung (68), welche die Sensoreinrichtung (63) trägt und
welche über eine kabelgebundene Datennetzverbindung (E) mit der Schnittstelleneinrichtung (70) in kommunikativer Verbindung steht.

5. MOWABS (10) gemäß einem der Ansprüche 1 bis 4, wobei das Kommunikationssubsystem (50) einen Kommunikations- und Routingrechner (51), einen IT-Sicherheitscontroller (52) mit einer Zeitsynchronisierungseinheit und eine Administratorkonsole aufweist.

6. MOWABS (10) gemäß einem der Ansprüche 1 bis 5, wobei die Antenneneinrichtung (40) ein Antennenfunkgerät (42), zumindest eine Funkantenne, die als Sektor- oder als Richtfunk- oder als Stabantenne (43) ausgeprägt sein kann, und ein Antenneneinrichtungsbedienpanel (41) aufweist.

7. MOWABS (10) gemäß einem der Ansprüche 1 bis 6, wobei die Energieversorgungseinrichtung (20) eine Energieversorgungsmanagementkomponente (22) und ein Energieversorgungseinrichtungsbedienpanel (21) aufweist, und wobei die Energiequelle (23) eine Brennstoffzelle mit einer daran angeschlossenen nicht-unterbrechbaren Batterie aufweist.

8. MOWABS (10) gemäß einem der Ansprüche 1 bis 7, wobei das Sensorsteuergerät (62) dazu ausgelegt ist, die empfangenen Bilddaten des Infrarotsensors und des VIS-Sensors in separaten Verarbeitungsmodulen (81, 82) zu verarbeiten, mit Hilfe mindestens eines ersten neuronalen Faltungsnetzwerkes in den empfangenen Bilddaten des Infrarotsensors eine automatische Objekterkennung durchzuführen und mit Hilfe mindestens eines zweiten neuronalen Faltungsnetzwerkes in den empfangenen Bilddaten des VIS-Sensors eine automatische Objekterkennung durchzuführen.

9. MOWABS (10) gemäß einem der Ansprüche 1 bis 7, wobei das Sensorsteuergerät (62) dazu ausgelegt ist, die empfangenen Bilddaten des Infrarotsensors und des VIS-Sensors in einem gemeinsamen Verarbeitungsmodul (83) zu verarbeiten, mit Hilfe mindestens eines ersten neuronalen Faltungsnetzwerkes in den empfangenen Bilddaten des Infrarotsensors eine automatische Objekterkennung durchzuführen, mit Hilfe mindestens eines zweiten neuronalen Faltungsnetzwerkes in den empfangenen Bilddaten des VIS-Sensors eine automatische Objekterkennung durchzuführen und mit Hilfe mindestens eines dritten neuronalen Faltungsnetzwerkes die erkannten Merkmale der Objekte der Bilddaten des Infrarotsensors und des VIS-Sensors zu gemeinsamen Informationen über automatisch erkannte Objekte zu fusionieren.

10. Taktisches Luftverteidigungssystem mit:
einem Gefechtsstand (1);
einem Radargerät (2);
einer Flugabwehrkörperabschusseinrichtung (3); und
einem MOWABS (10) gemäß einem der Ansprüche 1 bis 9, welches mit dem Gefechtsstand (1) in Kommunikationsverbindung steht.

11. Verfahren (M) zur mobilen optischen Weitbereichsaufklärungs- und - beobachtung, mit den Schritten:
Koppeln (M1) eines Kommunikationssubsystems (50) mit einer Schnittstellenvorrichtung (70) über eine kabelgebundene Datennetzverbindung (E);
Koppeln (M2) einer mindestens einen Infrarotsensor, einen VIS-Sensor und
einen Laserentfernungsmesser aufweisenden Sensoreinrichtung (63) mit der Schnittstellenvorrichtung (70) über eine kabelgebundene Datennetzverbindung (E);
Durchführen (M3) einer automatischen Objekterkennung in Bilddaten des Infrarotsensors und des VIS-Sensors mit Hilfe mindestens eines neuronalen Faltungsnetzwerkes;
Übermitteln (M4) von Informationen über automatisch erkannte Objekte an das Kommunikationssubsystem (50); und
Versorgen (M5) der Sensoreinrichtung (63) und des Kommunikationssubsystems (50) mit elektrischer Energie aus einer Energiequelle (23) einer Energieversorgungseinrichtung (20).

12. Verfahren (M) gemäß Anspruch 11, wobei das Kommunikationssubsystem (50) einen Kommunikations- und Routingrechner (51), einen IT-Sicherheitscontroller (52) mit einer Zeitsynchronisierungseinheit und eine Administratorkonsole aufweist.

13. Verfahren (M) gemäß einem der Ansprüche 11 bis 12, wobei Bilddaten des Infrarotsensors und des VIS-Sensors in separaten Verarbeitungsmodulen (81, 82) verarbeitet werden, mit Hilfe mindestens eines ersten neuronalen Faltungsnetzwerkes in den Bilddaten des Infrarotsensors eine automatische Objekterkennung durchgeführt wird und mit Hilfe mindestens eines zweiten neuronalen Faltungsnetzwerkes in den Bilddaten des VIS-Sensors eine automatische Objekterkennung durchgeführt wird.

14. Verfahren (M) gemäß einem der Ansprüche 11 bis 12, wobei Bilddaten des Infrarotsensors und des VIS-Sensors in einem gemeinsamen Verarbeitungsmodul (83) verarbeitet werden, mit Hilfe mindestens eines ersten neuronalen Faltungsnetzwerkes in den Bilddaten des Infrarotsensors eine automatische Objekterkennung durchgeführt wird, mit Hilfe mindestens eines zweiten neuronalen Faltungsnetzwerkes in den Bilddaten des VIS-Sensors eine automatische Objekterkennung durchgeführt wird und mit Hilfe mindestens eines dritten neuronalen Faltungsnetzwerkes die erkannten Merkmale der Objekte der Bilddaten des Infrarotsensors und des VIS-Sensors zu gemeinsamen Informationen über automatisch erkannte Objekte fusioniert werden.
